# EUROPÄISCHE PATENTSCHRIFT

(11) **EP 1 076 896 B1**
(45) Veröffentlichungstag und Bekanntmachung des Hinweises auf die Patenterteilung: **09.10.2002**
(21) Anmeldenummer: 99931001.4
(22) Anmeldetag: 03.05.1999
(51) Int. Cl.: G10L 11/00

(54) **VERFAHREN UND VORRICHTUNG ZUR ERKENNUNG MINDESTENS EINES SCHLÜSSELWORTS IN GESPROCHENER SPRACHE DURCH EINEN RECHNER**
METHOD AND DEVICE ENABLING A COMPUTER TO RECOGNISE AT LEAST ONE KEYWORD IN SPEECH
PROCEDE ET DISPOSITIF D'IDENTIFICATION PAR UN ORDINATEUR D'AU MOINS UN MOT DE PASSE EN LANGAGE PARLE

(30) Priorität: 15.05.1998 DE 19821900
(43) Veröffentlichungstag der Anmeldung: 21.02.2001
(73) Patentinhaber: SIEMENS AKTIENGESELLSCHAFT, 80333 München (DE)
(72) Erfinder: KÄMMERER, Bernhard, D-85521 Ottobrunn (DE)
(86) Internationale Anmeldenummer: DE9901322
(87) Internationale Veröffentlichungsnummer: WO99060560

(56) Entgegenhaltungen:
- WO-A-97/46998
- OSTENDORF ET AL.: "A stochastic segment model for phoneme-based continuous speech recognition" IEEE TRANSACTIONS ON ACOUSTICS, SPEECH AND SIGNAL PROCESSING, Bd. 37, Nr. 12, 1. Dezember 1989 (1989-12-01), Seiten 1857-1869, XP000099487 New York, NY, US
- JUNKAWITSCH ET AL.: "A new keyword spotting algorithm with pre-calculated optimal thresholds" PROCEEDING OF FOURTH INTERNATIONAL CONFERENCE ON SPOKEN LANGUAGE PROCESSING. ICSLP '96, [Online] Bd. 4, 3. - 6. Oktober 1996, Seiten 2067-2070, XP002119160 Philadelphia, PA, US Retrieved from the Internet: <URL:http://www.asel.udel.edu/icslp/cdrom/ vol4/119/a119.pdf> [retrieved on 1999-10-15]

## Beschreibung

Die Erfindung betrifft ein Verfahren und eine Vorrichtung zur Erkennung mindestens eines Schlüsselworts in gesprochener Sprache durch einen Rechner.

Ein Verfahren und eine Vorrichtung zur Erkennung gesprochener Sprache sind aus [1] bekannt. Dort finden sich auch eine grundlegende Einführung in Komponenten einer Vorrichtung bzw. eines Verfahrens zur Spracherkennung sowie wichtiger, bei der Spracherkennung üblicher Techniken.

Ein Schlüsselwort ist ein bestimmtes Wort, das von einer Vorrichtung zur Spracherkennung in gesprochener Sprache erkannt werden soll. Mit solch einem Schlüsselwort ist zumeist eine vorgegebene Aktion verknüpft, d.h. nach Erkennung des Schlüsselworts wird diese Aktion ausgeführt.

Auch in [2] sind Verfahren und Vorrichtung zur Erkennung gesprochener Sprache beschrieben. Hieraus geht u.a. hervor, daß die Modellierung mittels Hidden-Markov-Modellen eine Anpassung an die Variation der Sprechergeschwindigkeit erlaubt und bei der Erkennung somit eine dynamische Anpassung der vorgegebenen Sprachbausteine an die gesprochene Sprache erfolgt, indem insbesondere ein Stauchen bzw. Dehnen der Zeitachse durchgeführt wird. Dies entspricht einer dynamischen Anpassung (auch: dynamischen Programmierung), die z.B. durch den Viterbi-Algorithmus gewährleistet wird.

Der Abstand (Distanz) zwischen Lauten bzw. Lautfolgen wird z.B. durch Bestimmung eines (mehrdimensionalen) Abstandes zwischen Merkmalsvektoren, die Laute der Sprache in digitalisierter Form beschreiben, bestimmt. Dieser Abstand ist ein Beispiel für ein Ähnlichkeitsmaß zwischen Lauten oder Lautfolgen.

Eine Vorrichtung zur Schlüsselworterkennung ist in Junkawitsch et al.: "A New Keyword Spotting Algorithm with Pre-calculated Optimal Thresholds", Proceedings of Fourth International Conference of Spoken Language Processing, Oktober 1996, Philadelphia (USA), Seiten 2067-2070 offenbart, die gesprochene Sprache in segmentierte Testmuster unterteilt und eine Zuordnung zu gespeicherten Schlüsselwörtern mittels Hidden-Markov-Modellen durchführt.

Die **Aufgabe** der Erfindung besteht darin, ein Verfahren und eine Vorrichtung zur Erkennung eines Schlüsselworts anzugeben, wobei insbesondere die Erkennung äußerst robust und unempfindlich gegenüber Störungen ist.

Die Aufgabe wird gemäß der Merkmale der unabhängigen Patentansprüche gelöst.

Es wird ein Verfahren zur Erkennung mindestens eines Schlüsselworts in gesprochener Sprache durch einen Rechner angegeben, wobei das Schlüsselwort in Segmente unterteilt wird und jedem Segment eine Menge von Referenzmerkmalen zugeordnet wird. Ein Testmuster, das in der gesprochenen Sprache enthalten ist, wird in Segmente unterteilt, wobei jedem Segment des Testmusters ein dem Segment ähnliches Referenzmerkmal aus der Menge der Referenzmerkmale für das entsprechende Segment des Schlüsselworts zugeordnet wird. Das Testmuster wird als Schlüsselwort erkannt, wenn ein Ähnlichkeitsmaß für die kumulierte segmentweise Zuordnung eines Referenzmerkmals des Schlüsselworts zu dem Testmuster unterhalb einer vorgegebenen Schranke liegt. Das Testmuster wird als Schlüsselwort nicht erkannt, falls das Ähnlichkeitsmaß nicht unterhalb einer vorgegebenen Schranke liegt. Dabei kennzeichnet ein niedriges Ähnlichkeitsmaß ein möglichst gute Übereinstimmung von Referenzmerkmal des Schlüsselworts zu Testmuster.

Nachfolgend wird kurz auf die verschiedenen Begriffe und deren Bedeutung eingegangen:
Das Testmuster ist ein in der gesprochenen Sprache enthaltenes Muster, das mit dem Schlüsselwort zu vergleichen ist und ggf. als das Schlüsselwort erkannt wird. Das Ähnlichkeitsmaß kennzeichnet den Grad der Übereinstimmung eines Testmusters mit dem Schlüsselwort bzw. eines Teils des Testmusters mit einem Teil des Schlüsselworts. Das Segment ist ein Abschnitt des Testmusters bzw. des Schlüsselworts, der eine vorgegebene Dauer aufweist. Das Referenzmerkmal ist ein auf ein Segment bezogenes Teilmerkmal des Schlüsselworts. Ein Referenzmuster umfaßt die eine Ausdrucksform des Schlüsselworts kennzeichnenden Referenzmerkmale, eine Wortklasse umfaßt alle Referenzmuster, die durch unterschiedliche Zusammensetzungen von Referenzmerkmalen entstehen können, wobei insbesondere mehrere Referenzmerkmale pro Segment für das Schlüsselwort abgespeichert werden. In einer Trainingsphase werden Repräsentanten für Referenzmerkmale des jeweiligen Schlüsselwortes bestimmt und abgespeichert, während in einer Erkennungsphase ein Vergleich des Testmusters mit möglichen Referenzmustern des Schlüsselwortes durchgeführt werden.

In der Trainingsphase werden vorzugsweise eine vorgegebene Menge M Repräsentanten für die Referenzmerkmale abgespeichert. Stehen mehr als Referenzmerkmale als freie Plätze M zur Verfügung, so kann eine Mittelung, z.B. in Form eines gleitenden Mittelwertes, der Referenzmerkmale erfolgen, um somit die Information der zusätzlichen Referenzmerkmale in den Repräsentanten berücksichtigt werden.

Eine Weiterbildung der Erfindung besteht darin, daß das Testmuster (und/oder das Schlüsselwort) eine abgeschlossene Lauteinheit, insbesondere ein Wort ist. Testmuster und/oder Schlüsselwort können auch je ein Phonem, ein Diphon, ein sonstiger aus mehreren Phonemen zusammengesetzter Laut oder einer Menge von Wörtern sein.

Eine andere Weiterbildung besteht darin, daß die Anzahl der Segmente für das Schlüsselwort und für das Testmuster jeweils gleich ist.

Im Rahmen einer zusätzlichen Weiterbildung wird das Testmuster mit mehreren Schlüsselwörtern verglichen und das dem Testmuster ähnlichste Schlüsselwort ausgegeben. Dies entspricht einem System zur Einzelworterkennung, wobei die mehreren Schlüsselwörter die zu erkennenden Einzelwörter in der gesprochenen Sprache darstellen. Es wird jeweils das Schlüsselwort ausgegeben, das am besten auf das in der gesprochenen Sprache enthaltene Testmuster paßt.

Auch ist es eine Weiterbildung, daß zum Abspeichern des Schlüsselworts sowie des Testmusters Merkmalsvektoren eingesetzt werden, wobei zu vorgegebenen Abtastzeitpunkten die Sprache digitalisiert und je ein Merkmalsvektor mit den die Sprache kennzeichnenden Daten abgespeichert wird. Diese Digitalisierung des Sprachsignals findet im Rahmen einer Vorverarbeitung statt. Vorzugsweise wird alle 10 ms ein Merkmalsvektor aus dem Sprachsignal bestimmt.

Eine andere Weiterbildung besteht darin, daß für jedes Segment ein über alle Merkmalsvektoren dieses Segmentes gemittelter Merkmalsvektor abgespeichert und als für dieses Segment kennzeichnend weiterverwendet wird. Die digitalisierten Sprachdaten, die beispielsweise alle 10 ms anfallen, werden vorzugsweise in überlappenden Zeitfenstern mit einer zeitlichen Ausdehnung von 25 ms vorverarbeitet. Dazu können eine LPC-Analyse, eine Spektral-Analyse oder eine Cepstral-Analyse eingesetzt werden. Als Ergebnis der jeweiligen Analyse steht für jeden 10ms-Abschnitt ein Merkmalsvektor mit n Koeffizienten zur Verfügung. Die Merkmalsvektoren eines Segmentes werden vorzugsweise gemittelt, so daß pro Segment ein Merkmalsvektor zur Verfügung steht. Im Rahmen des Trainings für die Erkennung des Schlüsselworts können pro Segment aus unterschiedlichen Quellen für gesprochene Sprache mehrere verschiedene Referenzmerkmale abgespeichert werden, so daß mehrere gemittelte Referenzmerkmale (Merkmalsvektoren für das Schlüsselwort) zur Verrugung stehen.

Ferner wird eine Vorrichtung zur Erkennung mindestens eines Schlüsselworts in gesprochener Sprache angegeben, die eine Prozessoreinheit aufweist, die derart eingerichtet ist, daß folgende Schritte durchgeführt werden:
- Das Schlüsselwort wird in Segmente unterteilt, wobei jedem Segment eine Menge von Referenzmerkmalen zuordenbar ist;
- ein Testmuster in der gesprochenen Sprache wird in Segmente unterteilt, wobei jedem Segment des Testmusters ein dem Testmuster ähnliches Referenzmerkmal aus der Menge der Referenzmerkmale für das entsprechende Segment des Schlüsselworts zuordenbar ist;
- das Testmuster wird als Schlüsselwort erkannt, wenn ein Ähnlichkeitsmaß für die kumulierte segmentweise Zuordnung eines Referenzmerkmals des Schlüsselworts zu dem Testmuster unterhalb einer vorgegebenen Schranke liegt;
- falls das Ähnlichkeitsmaß nicht unterhalb der vorgegebenen Schranke liegt, so wird das Schlüsselwort nicht erkannt.

Weiterbildungen der Erfindung ergeben sich auch aus den abhängigen Ansprüchen.

Die Vorrichtung ist insbesondere geeignet zur Durchführung des erfindungsgemäßen Verfahrens oder einer seiner vorstehenden erläuterten Weiterbildungen.

Anhand der folgenden Figuren werden Ausführungsbeispiele der Erfindung näher dargestellt.

Es zeigen
- Fig.1: eine Skizze, die Schritte eines Verfahrens zur Erkennung mindestens eines Schlüsselworts in gesprochener Sprache darstellt,
- Fig.2: eine Skizze mit zwei möglichen Ausführungsbeispielen für die Erkennung eines Schlüsselworts,
- Fig.3: eine Skizze, die eine Abbildung eines Testmusters auf ein Schlüsselwort und die Bestimmung eines Ähnlichkeitsmaßes veranschaulicht,
- Fig.4: eine Vorrichtung zur Erkennung eines Schlüsselworts in gesprochener Sprache.

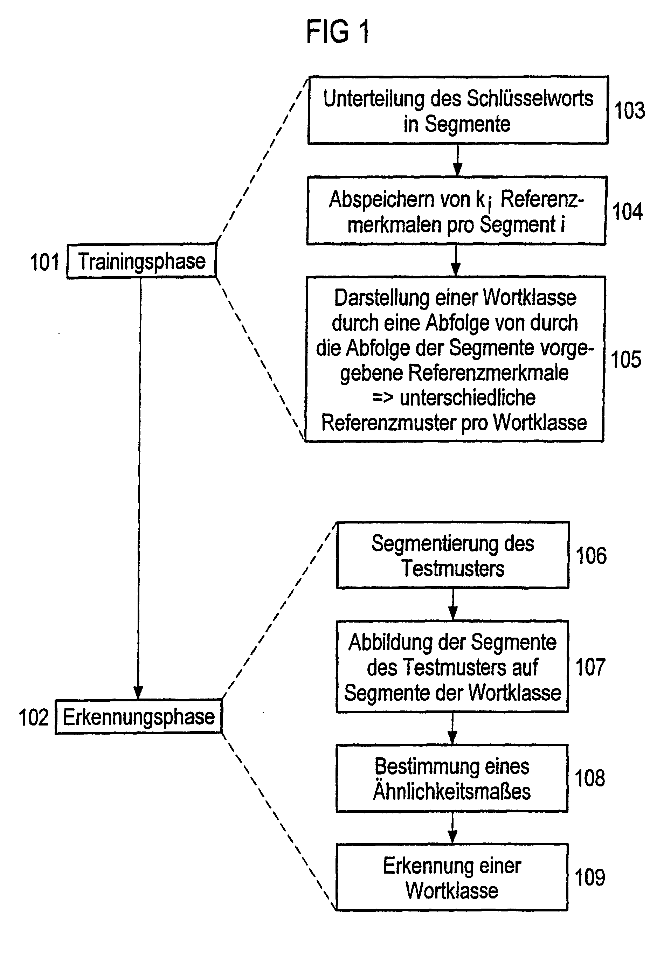

**Fig.1** zeigt eine Skizze, die Schritte eines Verfahrens zur Erkennung mindestens eines Schlüsselworts in gesprochener Sprache darstellt.

Die gesprochene Sprache wird vorzugsweise alle 10 ms in überlappenden Zeitfenstern von 25ms Dauer digitalisiert und gegebenenfalls vorverarbeitet (gefiltert). Dazu wird entweder eine LPC-, eine Spektral- oder eine Cepstralanalyse angewandt. Als ein Ergebnis der Vorverarbeitung steht zu jedem 10 ms-Abschnitt ein Merkmalsvektor mit n Koeffizieten zur Verfügung.

Die einzelnen Komponenten der gesprochenen Sprache - vorzugsweise Worte - werden anhand der zwischen den Wörtern anhand einer Pauseenergie oder eines Pausespektrums ermittelten Pausen bestimmt. Auf diese Weise wird ein einzelnes Wort innerhalb der gesprochenen Sprache identifiziert.

In Fig.1 werden grob zwei Komponenten, eine Trainingsphase 101 und eine Erkennungsphase 102 unterschieden. Sowohl in der Trainingsphase 101 als auch in der Erkennungsphase 102 wird das ermittelte Wort, sei es ein Schlüsselwort oder ein Testmuster, in eine vorgegebene Anzahl von Segmenten unterteilt. Vorzugsweise werden die Merkmalsvektoren eines Segments gemittelt. Eine Abfolge der Segmente mit den gemittelten Merkmalsvektoren liefert ein Wortmuster.

Ein in der gesprochenen Sprache erkanntes Wort (Schlüsselwort oder Testmuster) wird jeweils in eine vorgegebene Anzahl von Segmenten unterteilt. Die mehreren Merkmalsvektoren innerhalb eines Segments werden gemittelt, wobei diese gemittelten Merkmalsvektoren insgesamt das Wort darstellen (Wortmuster). Ein Schlüsselwort wird zur späteren Erkennung abgespeichert, wobei insbesondere mehrere Repräsentationen dieses Schlüsselworts abgespeichert werden. Besonders nützlich hat es sich erwiesen, das Schlüsselwort von mehreren Sprechern mehrere Male aufzunehmen und jeweils die besten das Schlüsselwort beschreibenden Aufnahmen abzuspeichern. Dabei werden diese besten Aufnahmen in Form von je einem gemittelten Merkmalsvektor pro Segment abgespeichert. Es ergeben sich demnach eine vorgegebene Anzahl von auf das jeweilige Segmente des Schlüsselworts bezogenen Referenzmerkmalen. Anhand der auf diese Art abgespeicherten Referenzmerkmale kann das Wort aus der durch die Abfolge der Segmente bestimmten Reihenfolge zu unterschiedlichen Referenzmustern zusammengesetzt werden. Dabei werden Referenzmerkmale unterschiedlicher Repräsentationen der Schlüsselwörter zu einem Referenzmuster zusammengesetzt. Somit ergeben sich mehrere Möglichkeiten für Referenzmuster als ursprünglich Repräsentanten für das Schlüsselwort abgespeichert wurden. Bei der der Trainingsphase 101 folgenden Erkennungsphase 102 wird jeweils das nächstliegende Referenzmerkmal (bezogen auf das Segment) dem entsprechenden Segment des Testmusters zugeordnet.

Die Trainingsphase 101 umfaßt die Unterteilung des Schlüsselworts in eine vorgegebene Anzahl von Segmenten (vergleiche Block 103). In einem Schritt 104 werden kᵢ Referenzmerkmale pro Segment i abgespeichert, wobei k die Anzahl der für das Schlüsselwort ermittelten Repräsentationen darstellt. Die Wortklasse wird in einem Schritt 105 durch eine Abfolge von durch die Abfolge der Segmente vorgegebenen Referenzmerkmale dargestellt. Die Wortklasse, die das Schlüsselwort mit allen abgespeicherten Variationen beschreibt wird durch die verschiedenen Kombinationen der Referenzmerkmale zu Referenzmustern, welche Referenzmuster-Instanzen der Wortklasse darstellen, beschrieben.

In der Erkennungsphase 102 wird bestimmt, ob ein Wort, hier bezeichnet als Testmuster, einem Schlüsselwort zugeordnet werden kann. Dazu wird das Testmuster entsprechend obiger Ausführung in einem Schritt 106 segmentiert. In einem Schritt 107 werden Segmente des Testmusters auf Segmente des Schlüsselworts abgebildet, wobei jedes Segment des Testmusters jeweils das ähnlichste Referenzmerkmal des Schlüsselworts zugeordnet wird. Diese Zuordnung wird für alle Segmente durchgeführt, wobei die für jedes Segment berechneten Ähnlichkeitsmaße zu einem gesamten Ähnlichkeitsmaß kumuliert werden (siehe Schritt 108). Ist der Wert des kumulierten Ähnlichkeitsmaßes unterhalb einer vorgegebenen Schranke, so entspricht das einer hohen Ähnlichkeit von Testmuster und Schlüsselwort, das Testmuster wird als Schlüsselwort erkannt (siehe Schritt 109).

Die Ähnlichkeit wird insbesondere anhand eines Abstandes bestimmt. Sind zwei Muster ähnlich, so haben sie voneinander einen geringen Abstand, die Differenz der Merkmalsvektoren ist entsprechend gering. Die für die jeweiligen Segmente bestimmten Ähnlichkeitsmaße entsprechen somit Abständen von Merkmalsvektoren, welche Abstände wiederum für einen bei der Abbildung von Segment auf Segment vollzogenem Abbildungsfehler entspricht. Die Kumulation der Ähnlichkeitsmaße entspricht der Addition von segmentweise gemachten Abbildungsfehlern, das gesamte Ähnlichkeitsmaß ist demnach ein Wert für einen insgesamt bei einer Zuordnung von Testmuster zu Schlüsselwort gemachten Fehler. Da insbesondere mehr als ein Schlüsselwort erkannt werden soll, wird das Testmuster auf mehrere Schlüsselwörter abgebildet, wobei jeweils segmentweise Ähnlichkeitsmaße bestimmt werden und ein kumuliertes Ähnlichkeitsmaß für jede Zuordnung zu jedem Schlüsselwort berechnet wird. Erkannt wird dasjenige Schlüsselwort, bei dem das kumulierte Gesamtähnlichkeitsmaß den kleinsten Wert aller Zuordnungen zu den mehreren Schlüsselwörter aufweist.

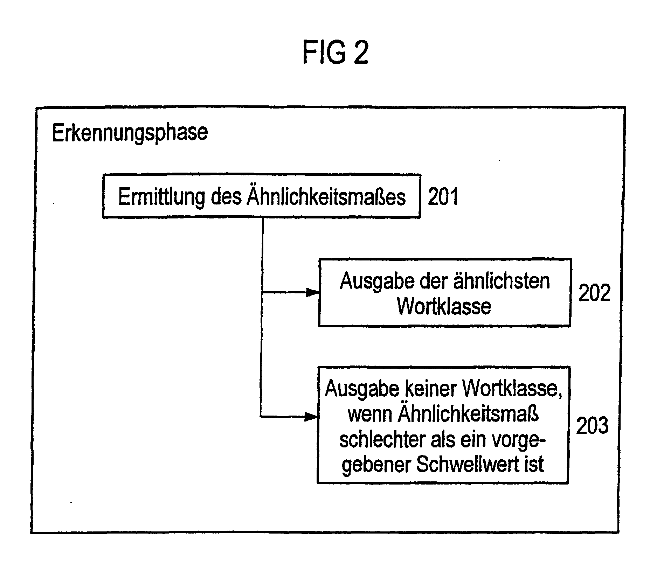

**Fig.2** zeigt eine Skizze mit zwei möglichen Ausführungsbeispielen für die Erkennung eines Schlüsselworts. Die unter Fig.1 beschriebene Bestimmung des Ähnlichkeitsmaßes für jedes Schlüsselwort (vgl. Schritt 201) führt zur Erkennung bzw. zur Ausgabe des ähnlichsten Schlüsselwortes (vgl. Schritt 202 bzw. Beschreibung zu Fig.1) Ein zweites Ausführungsbeispiel erkennt keine Wortklasse bzw. gibt keine Wortklasse aus, wenn das beste kumulierte Ähnlichkeitsmaß, also der geringste Fehler bei der Abbildung des Testmusters auf die jeweiligen Schlüsselwörter, oberhalb einer vorgegebenen Schranke ist (vgl. Schritt 203). In so einem Fall wäre eine Zuordnung, also eine Abbildung des Testmusters auf ein Schlüsselwort so schlecht, daß davon auszugehen ist, daß das Testmuster kein Schlüsselwort ist. Eine erzwungene Zuordnung zu dem am besten passenden Schlüsselwort, das immer noch schlecht ist und kaum paßt, unterbleibt.

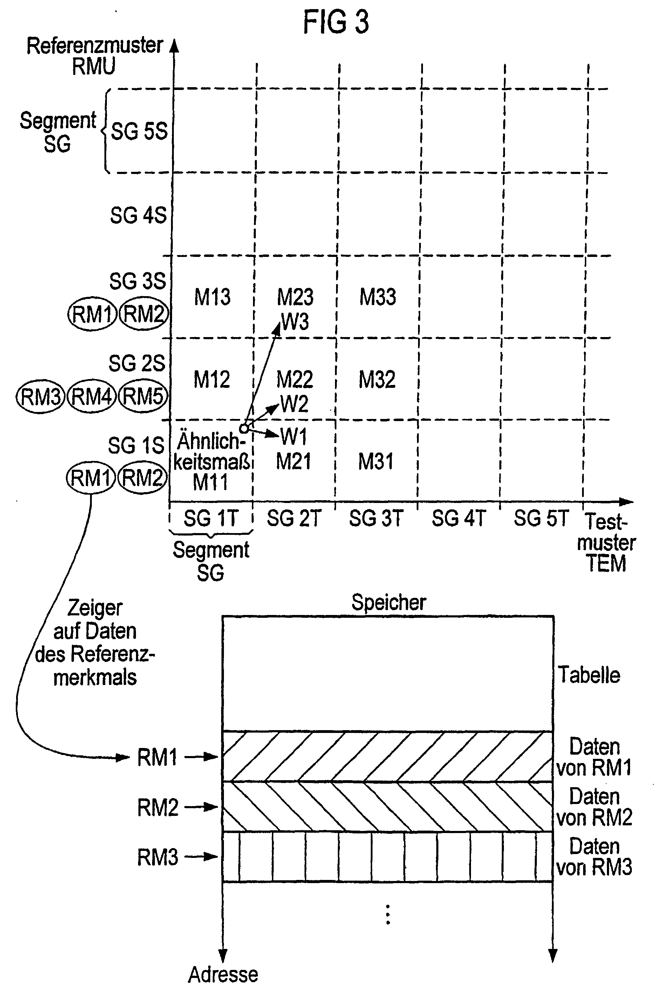

In **Fig.3** ist eine Skizze dargestellt, die eine Abbildung eines Testmusters auf ein Schlüsselwort und die Bestimmung eines Ähnlichkeitsmaßes veranschaulicht.

Es werden beispielhaft fünf Segmente SGᵢT (i=1,2,...,5) eines Testmusters TEM auf fünf Segmente SGᵢS eines Referenzmusters RMU abgebildet. Das zu erkennende Schlüsselwort (Wortklasse) kann durch unterschiedliche Kombinationen von Referenzmerkmalen RMᵢ, bedingt durch die Reihenfolge der Segmente, dargestellt werden. Die Referenzmerkmale werden, wie oben beschrieben, als besonders gute Repräsentationen für die Segmente des Schlusselwortes ermittelt (Trainingsphase).

Anfangs wird das erste Segment SG1T des Testmusters dem ersten Segment SG1S des Schlusselwortes zugeordnet. Dabei wird ein Ähnlichkeitsmaß M11 ermittelt, wobei der das erste Segment SG1T des Testmusters TEM beschreibende gemittelte Merkmalsvektor auf das bessere der Referenzmerkmale RM1 und RM2 abgebildet wird. Daraufhin wird das zweite Segment SG2T des Testmusters TEM auf ein nächstes Referenzmerkmal des Schlüsselworts abgebildet. Dabei sind drei unterschiedliche Wege W1, W2 und W3 möglich. Der Weg W1 geht ein Segment nach rechts mit der Steigung 0, der Weg W2 geht ein Segment nach rechts mit der Steigung 1 und der Weg W3 geht ein Segment nach rechts mit der Steigung 2. Es wird also das beste Ähnlichkeitsmaß ermittelt, wobei das zweite Segment SG2T des Testmusters TEM mit den Referenzmerkmalen RM1, RM2 (für den Weg W1), RM3, RM4, RM5 (für den Weg W2) und RM1, RM2 (für den Weg W3) verglichen und das ähnlichste ermittelt wird. Entsprechend wird, abhängig vom beschrittenen Weg beim Übergang vom ersten zum zweiten Segment, auch beim Übergang vom zweiten zum dritten Segment fortgefahren.

Die das Schlüsselwort repräsentierenden Referenzmerkmale sind beispielhaft für das erste Segment SG1S und das dritte Segment SG3S gleich, da die jeweiligen Segmente die gleichen Laute darstellen. Um nicht unnötig Speicherplatz zu vergeuden und jeweils die Referenzmerkmale RMi mehrfach und bei jedem Schlüsselwort einzeln abzuspeichern, wird eine Tabelle angelegt, die die Referenzmerkmale enthält (vgl. TABELLE). Mit den Segmenten des Schlüsselworts werden somit nur Zeiger auf den Speicherbereich der Tabelle TABELLE abgelegt, wobei die Zeiger die jeweiligen Daten der Referenzmerkmale referenzieren. Der Speicherplatzbedarf für einen Zeiger (auch Offset innerhalb einer Tabelle) ist wesentlich geringer als die zu dem jeweiligen Referenzmerkmal gehörenden Daten.

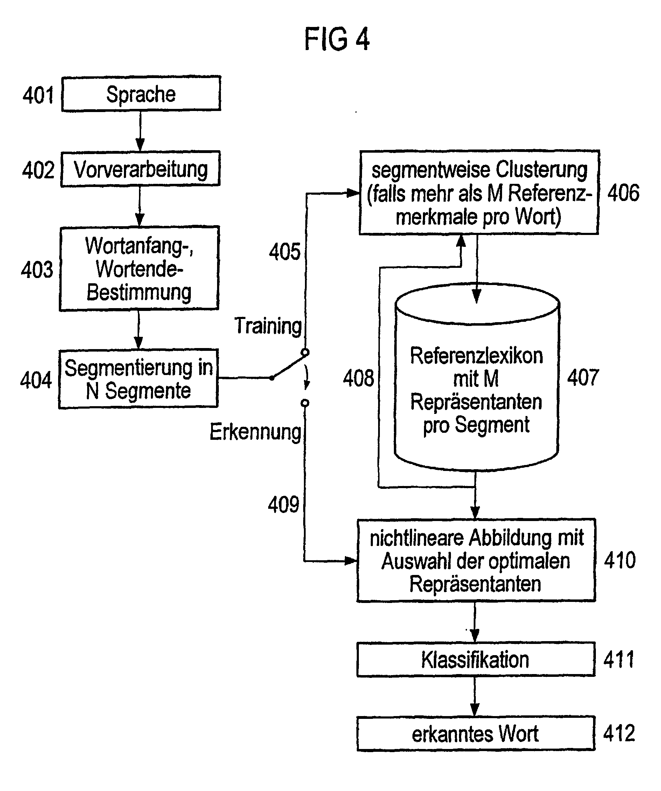

**Fig.4** zeigt eine Vorrichtung zur Spracherkennung mindestens eines Schlüsselworts. Aus gesprochener Sprache 401 werden anhand einer Vorverarbeitung 402 Merkmalsvektoren (vgl. [2]) bestimmt. Daraufhin wird eine Wortanfang/Wortende-Bestimmung 403 durchgeführt und das identifizierte Wort in N Segmente unterteilt (vgl. Block 404). Während einer Trainingsphase (bestimmt durch die Verbindung 405) werden die Segmente in einem Schritt 406 in einer Datenbank 407 abgespeichert, wobei mehr als M Repräsentanten für ein Segment zu einer Mittelung, insbesondere nach einem gleitenden Mittelwert, der Repräsentanten in der Datenbank 407 führen. Dazu werden die Repräsentanten eines Segments über eine Verbindung 408 dem Vorgang der Mittelung (auch Clusterung) zugeführt.
In einer Erkennungsphase (angezeigt durch die Verbindung 409) wird eine nichtlineare Abbildung mit einer Auswahl optimal zu einem Testmuster passender Segmente, wobei für jedes Segment ein Repräsentant aus der Datenbank 407 ermittelt wird, vorgenommen (vgl. Block 410). Daraufhin erfolgt in einem Block 411 eine Klassifikation und das erkannte Wort wird ausgegeben (vgl. Block 411).

Im Rahmen dieses Dokuments wurden folgende Veröffentlichungen zitiert:
[1] A. Hauenstein: "Optimierung von Algorithmen und Entwurf eines Prozessors für die automatische Spracherkennung", Lehrstuhl für Integrierte Schaltungen, Technische Universität München, Dissertation, 19.07.1993, Kapitel 2, Seiten 13 bis 26.
[2] N. Haberland, et. al.: "Sprachunterricht - Wie funktioniert die computerbasierte Spracherkennung?", c't 5/98, Heinz Heise Verlag, Hannover 1998, Seiten 120 bis 125.

## Patentansprüche

1. Verfahren zur Erkennung mindestens eines Schlüsselworts in gesprochener Sprache durch einen Rechner,
a) bei dem das Schlüsselwort in mehreren Repräsentationen abgespeichert wird,
b) bei dem das Schlüsselwort in Segmente unterteilt wird, wobei jedem Segment eine Menge von Referenzmerkmalen unterschiedlicher Repräsentationen zugeordnet wird,
c) bei dem ein Testmuster in der gesprochenen Sprache in Segmente unterteilt wird, wobei jedem Segment des Testmusters ein dem Segment ähnliches Referenzmerkmal aus der Menge der Referenzmerkmale für das entsprechende Segment des Schlüsselworts zugeordnet wird,
d) bei dem das Testmuster als das Schlüsselwort erkannt wird, für welches Schlüsselwort ein Ähnlichkeitsmaß bestimmt wird, das für die kumulierte segmentweise Zuordnung eines Referenzmerkmals des Schlüsselworts zu dem Testmuster unterhalb einer vorgegebenen Schranke liegt.

2. Verfahren nach Anspruch 1,
bei dem das Testmuster eine abgeschlossene Lauteinheit, insbesondere ein Wort, ist.

3. Verfahren nach Anspruch 1 oder 2,
bei dem die Anzahl der Segmente für das Schlüsselwort und für das Testmuster jeweils gleich ist.

4. Verfahren nach einem der Ansprüche 1 bis 3,
bei dem das Testmuster mit mehreren Schlüsselwörtern verglichen und das ähnlichste Schlüsselwort ausgegeben wird.

5. Verfahren nach einem der vorhergehenden Ansprüche,
bei dem zum Abspeichern der Sprache für das Schlüsselwort sowie für das Testmuster Merkmalsvektoren eingesetzt werden, wobei zu vorgegebenen Abtastzeitpunkten die Sprache digitalisiert und je ein Merkmalsvektor mit den die Sprache kennzeichnenden Daten abgespeichert wird.

6. Verfahren nach Anspruch 5,
bei dem für jedes Segment ein über alle Merkmalsvektoren dieses Segments gemittelter Merkmalsvektor abgespeichert und als für dieses Segment kennzeichnend weiterverwendet wird.

7. Verfahren nach einem der vorhergehenden Ansprüche,
bei dem die vorgegebene Schranke derart bestimmt wird, daß stets ein Schlüsselwort erkannt wird.

8. Vorrichtung zur Erkennung mindestens eines Schlüsselworts in gesprochener Sprache,
bei der eine Prozessoreinheit vorgesehen ist, die derart ausgeführt ist, daß
a) das Schlüsselwort in mehreren Repräsentationen abspeicherbar ist,
b) das Schlüsselwort in Segmente unterteilbar ist, wobei jedem Segment eine Menge von Referenzmerkmalen unterschiedlicher Repräsentationen zuordenbar ist,
c) ein Testmuster in der gesprochenen Sprache in Segmente unterteilbar ist, wobei jedem Segment des Testmusters ein dem Segment ähnliches Referenzmerkmal aus der Menge der Referenzmerkmale für das entsprechende Segment des Schlüsselworts zuordenbar ist,
d) das Testmuster als das Schlüsselwort erkennbar ist, wenn ein Ahnlichkeitsmaß für die kumulierte segmentweise Zuordnung eines Referenzmerkmals des Schlüsselworts zu dem Testmuster unterhalb einer vorgegebene Schranke liegt.

## Claims

1. Method for recognizing at least one keyword in spoken speech by means of a computer,
a) in which the keyword is stored in a plurality of representations,
b) in which the keyword is subdivided into segments, each segment being assigned a set of reference features of different representations,
c) in which a test pattern in the spoken speech is subdivided into segments, each segment of the test pattern being assigned a reference feature, similar to the segment, from the set of reference features for the corresponding segment of the keyword, and
d) in which the test pattern is recognized as the keyword, for which keyword a measure of similarity is determined which is below a prescribed bound for the accumulated segmentwise assignment of a reference feature of the keyword.

2. Method according to Claim 1, in which the test pattern is an independent sound unit, in particular a word.

3. Method according to Claim 1 or 2, in which the number of segments for the keyword and for the test pattern is the same in each case.

4. Method according to one of Claims 1 to 3, in which the test pattern is compared with a plurality of keywords, and the most similar keyword is output.

5. Method according to one of the preceding claims, in which feature vectors are used for storing the speech for the keyword and for the test pattern, in which case at prescribed sampling instants the speech is digitized and one feature vector each is stored with the data characterizing the speech.

6. Method according to Claim 5, in which there is stored for each segment a feature vector which is averaged over all the feature vectors of this segment and is further used as a characteristic of this segment.

7. Method according to one of the preceding claims, in which the prescribed bound is determined in such a way that a keyword is always recognized.

8. Device for detecting at least one keyword in spoken speech, in which a processor unit is provided which is designed in such a way that
a) the keyword can be stored in a plurality of representations,
b) the keyword can be subdivided into segments, it being possible to assign each segment a set of reference features of different representations,
c) a test pattern in the spoken speech can be subdivided into segments, it being possible to assign each segment of the test pattern a reference feature, similar to the segment, from the set of reference features for the corresponding segment of the keyword, and
d) the test pattern can be recognized as the keyword when a measure of similarity for the accumulated segmentwise assignment of a reference feature of the keyword relative to the test pattern is below a prescribed bound.

## Revendications

1. Procédé pour l'identification par un ordinateur d'au moins un mot de passe en langage parlé,
a) dans lequel le mot de passe est mémorisé en plusieurs représentations,
b) dans lequel le mot de passe est divisé en segments, une quantité de caractéristiques de référence de différentes représentations étant associée à chaque segment,
c) dans lequel un échantillon test dans le langage parlé est divisé en segments, une caractéristique de référence similaire au segment, issue de la quantité de caractéristiques de référence pour le segment correspondant du mot de passe étant associée à chaque segment ;
d) dans lequel l'échantillon test est identifié en tant que mot de passe, pour lequel mot de passe est déterminé un degré de similitude, qui pour l'association cumulée par segments d'une caractéristique de référence du de mot passe avec l'échantillon test est inférieur à une certaine limite.

2. Procédé selon la revendication 1,
dans lequel l'échantillon test est une unité sonore fermée, notamment un mot.

3. Procédé selon l'une quelconque des revendications 1 ou 2,
dans lequel la quantité de segments pour le mot de passe et pour l'échantillon test est à chaque fois identique.

4. Procédé selon l'une quelconque des revendications 1 à 3,
dans lequel l'échantillon test est comparé à plusieurs mots de passe et le mot de passe le plus approchant est édité.

5. Procédé selon l'un quelconque des revendications précédentes,
dans lequel, pour la mémorisation de la parole pour le mot de passe et ainsi que pour l'échantillon test, des vecteurs de caractéristiques sont utilisés, du langage étant numérisé et à chaque fois un vecteur de caractéristiques étant sauvegardé avec les données caractérisant la parole, à des moments de balayage prédéfinis.

6. Procédé selon la revendication 5,
dans lequel pour chaque segment, la moyenne d'un vecteur de caractéristiques de référence, calculée à partir de tous les vecteurs de caractéristiques de référence dudit segment est sauvegardée et utilisée ultérieurement comme étant caractéristique pour ledit segment.

7. Procédé selon l'une quelconque des revendications précédentes,
dans lequel la limite prédéfinie est déterminée de manière à ce qu'un seul mot de passe soit identifié à chaque fois.

8. Dispositif d'identification d'au moins un mot de passe en langage parlé,
dans lequel un processeur est prévu, qui est réalisé de manière à ce que
a) le mot de passe soit mémorisable en plusieurs représentations,
b) le mot de passe soit divisible en plusieurs segments, une quantité de caractéristiques de référence de différentes représentations pouvant être associée à chaque segment,
c) un échantillon test dans le langage parlé soit divisible en segments, une caractéristique de référence similaire au segment pouvant être associée à chaque segment à partir de la quantité de caractéristiques de référence pour le segment correspondant du mot de passe,
d) l'échantillon test soit identifiable en tant que mot de passe, si un degré de similitude pour l'association cumulée par segments d'une caractéristique de référence du mot de passe avec l'échantillon test est inférieur à une limite prédéfinie.
